# EUROPEAN PATENT APPLICATION

(11) **EP 2 040 358 A2**
(43) Date of publication of application: **25.03.2009**
(21) Application number: 08016430.4
(22) Date of filing: 18.09.2008
(51) Int. Cl.: H02K 21/14

(54) **Interphase insulating sheet of rotating electric machine, method for manufacturing interphase insulating sheet, and electric compressor**

(30) Priority: 21.09.2007 JP 2007245621
(71) Applicant: KABUSHIKI KAISHA TOYOTA JIDOSHOKKI, Kariya-shi, Aichi-ken (JP)
(72) Inventor: Horiba, Tatsuya, Kariya-shi Aichi-ken (JP); Fukasaku, Hiroshi, Kariya-shi Aichi-ken (JP)
(74) Representative: HOFFMANN EITLE

(57) **Abstract**

An interphase insulating sheet of rotating electric machine is disclosed. The interphase insulating sheet includes a first insulating portion, a second insulating portion, and at least one bridge piece. The first insulating portion includes at least one first coupling aid integrally provided with the first insulating portion to extend from an opposing end of the first insulating portion facing the second insulating portion. The second insulating portion includes at least one second coupling aid integrally provided with the second insulating portion to extend from an opposing end of the second insulating portion facing the first insulating portion. A first end portion of the bridge piece is heated welded to the first coupling aid. A second end portion of the bridge piece is heated welded to the second coupling aid. The first coupling aid has a first positioning hole. The second coupling aid has a second positioning hole. The first end portion of the bride piece includes a third positioning hole, which overlaps the first positioning hole. The second end portion of the bride piece includes a fourth positioning hole, which overlaps the second positioning hole.

## Description

### BACKGROUND OF THE INVENTION

The present invention relates to an interphase insulating sheet of rotating electric machine, a method for manufacturing the interphase insulating sheet, and an electric compressor.

Japanese Laid-Open Utility Model Publication No. 59-37851 discloses an interphase insulating sheet for insulating the ends of a coil of one phase from the ends of the coils the other phases in a rotating electric machine. The interphase insulating sheet disclosed in the above publication includes a pair of coil end insulating portions, which are arranged between the coil ends and insulate the coil ends from each other, and bridge pieces, which are inserted in slots of a stator. The pair of coil end insulating portions and the bridge pieces are formed separately, and both ends of each bridge piece are heat welded to the pair of coil end insulating portions. Small holes of the same diameter are provided at the ends of each bridge piece and in the pair of coil end insulating portions. Rivets formed of a thermosetting resin are inserted in and heat welded to the small holes.

The pair of coil end insulating portions are apart from each other by a distance corresponding to the length of the stator, that is, the axial length of a rotor axis. With the configuration in which rivets are inserted in the small holes provided at the ends of the bridge pieces and the coil end insulating portions, positional displacement does not occur between the ends of the bridge pieces and the coil end insulating portions during heat welding. Thus, the pair of coil end insulating portions after being heat welded are kept apart by the distance corresponding to the axial length of the rotor axis.

However, to manufacture the interphase insulating sheet, a step for manufacturing the rivets separately from the coil end insulating portions and the bridge pieces and a step for inserting the rivets in the small holes are necessary. Thus, it is not easy to manufacture the interphase insulating sheet in which the pair of coil end insulating portions and the bridge pieces are coupled by the rivets.

### SUMMARY OF THE INVENTION

Accordingly, it is an objective of the present invention to provide a method for easily manufacturing an interphase insulating sheet in which a pair of insulating portions coupled by a bridge piece are arranged apart from each other by a predetermined distance.

To achieve the foregoing objective and in accordance with a first aspect of the present invention, an interphase insulating sheet of a rotating electric machine is provided. The rotating electric machine is provided with a stator including an annular stator core. The stator core includes first and second end faces facing opposite directions in the axial direction of the stator core. The stator core includes a plurality of teeth arranged along an inner circumference of the stator core in the circumferential direction. Slots are formed between adjacent teeth, and coils of a plurality of phases are provided on the teeth in wave winding passing through the slots. The coil of each phase includes a first coil end arranged to protrude outside from the first end face and a second coil end arranged to protrude outside from the second end face. The interphase insulating sheet includes a first insulating portion arranged between the first coil ends of two different phases. A second insulating portion is arranged between the second coil ends of two different phases, and at least one bridge piece is inserted in one of the slots. The bridge piece includes a first end portion coupled to the first insulating portion and a second end portion coupled to the second insulating portion. The first insulating portion includes at least one first coupling aid integrally provided with the first insulating portion to extend from an opposing end of the first insulating portion facing the second insulating portion. The second insulating portion includes at least one second coupling aid integrally provided with the second insulating portion to extend from an opposing end of the second insulating portion facing the first insulating portion. The first end portion of the bridge piece is heat welded to the first coupling aid, and the second end portion of the bridge piece is heat welded to the second coupling aid. The first coupling aid includes a first positioning hole and the second coupling aid includes a second positioning hole. The first end portion of the bridge piece includes a third positioning hole, which overlaps the first positioning hole, and the second end portion of the bridge piece includes a fourth positioning hole, which overlaps the second positioning hole.

In accordance with a second aspect of the present invention, an electric compressor, which compresses gas in a compression chamber and discharges the gas by compression operation of a compression operation body based on rotation of a rotary shaft. The rotary shaft is driven by a rotating electric machine provided with the interphase insulating sheet according to the first aspect of the present invention.

In accordance with a third aspect of the present invention, a method for manufacturing an interphase insulating sheet of a rotating electric machine is provided. The rotating electric machine is provided with a stator including an annular stator core. The stator core includes first and second end faces facing opposite directions in the axial direction of the stator core. The stator core includes a plurality of teeth arranged along an inner circumference of the stator core in the circumferential direction. Slots are formed between adjacent teeth, and coils of a plurality of phases are provided on the teeth in wave winding passing through the slots. The coil of each phase includes a first coil end arranged to protrude outside from the first end face and a second coil end arranged to protrude outside from the second end face. The method includes: preparing a first insulating portion to be arranged between the first coil ends of two different phases and a second insulating portion to be arranged between the second coil ends of two different phases, the first insulating portion including at least one first coupling aid integrally provided with the first insulating portion to extend from an opposing end of the first insulating portion facing the second insulating portion, the second insulating portion including at least one second coupling aid integrally provided with the second insulating portion to extend from an opposing end of the second insulating portion facing the first insulating portion; preparing at least one bridge piece inserted in one of the slots, the bridge piece including a first end portion coupled to the first insulating portion and a second end portion coupled to the second insulating portion; forming a first positioning hole in the first coupling aid; forming a second positioning hole in the second coupling aid; forming a third positioning hole in the first end portion of the bridge piece; forming a fourth positioning hole in the second end portion of the bridge piece; inserting a first positioning pin in the first positioning hole and the third positioning hole, and in a state where the first coupling aid contacts the first end portion of the bridge piece, heat welding the first coupling aid with the first end portion of the bridge piece; and inserting a second positioning pin in the second positioning hole and the fourth positioning hole, and in a state where the second coupling aid contacts the second end portion of the bridge piece, heat welding the second coupling aid with the second end portion of the bridge piece.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1A is a cross-sectional view illustrating an electric compressor according to one embodiment of the present invention;
Fig. 1B is a perspective view illustrating the interphase insulating sheet provided in the compressor of Fig. 1A;
Fig. 2A is an developed view illustrating the interphase insulating sheet of Fig. 1B;
Fig. 2B is a cross-sectional view taken along line 2B-2B in Fig. 2A;
Fig. 2C is a cross-sectional view taken along line 2C-2C in Fig. 2A;
Fig. 3A is a cross-sectional view illustrating an ultrasonic welding apparatus used to manufacture the interphase insulating sheet of Fig. 1B;
Fig. 3B and Fig. 3C are diagrams for explaining ultrasonic welding performed by the ultrasonic welding apparatus of Fig. 3A;
Fig. 4 is a cross-sectional view taken along line 4-4 in Fig. 1A;
Fig. 5 is a cross-sectional view taken along line 5-5 in Fig. 1A;
Fig. 6 is a schematic diagram for explaining the state of a coil as viewed from the rear side of the compressor of Fig. 1A; and
Fig. 7 is a schematic diagram for explaining the state of the coil as viewed from the front side of the compressor of Fig. 1A.

### DETAILED DESCRIPTION OF THE PREFERRED EMBODIMENT

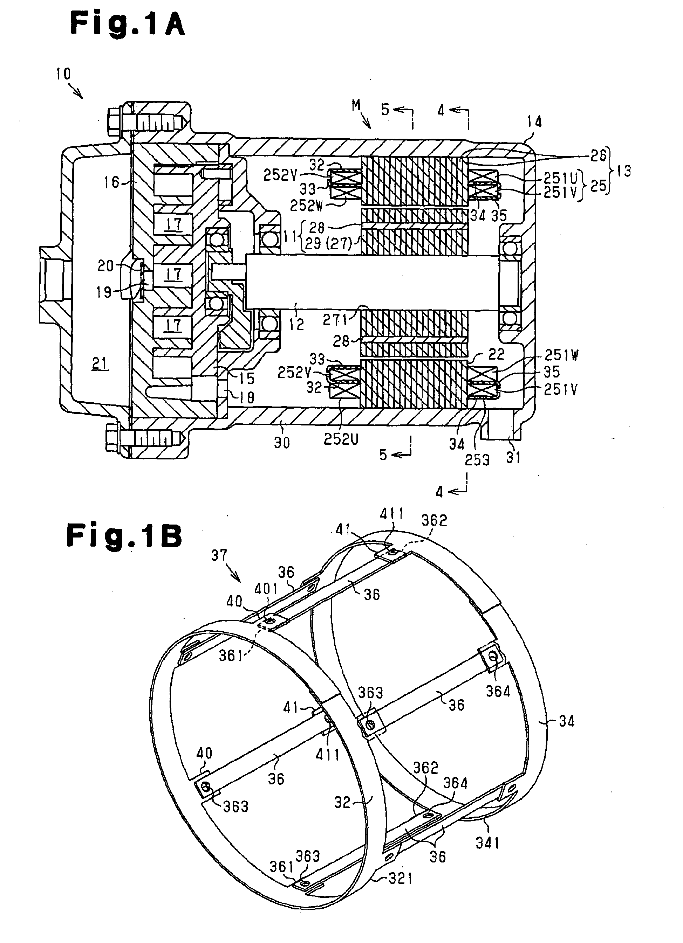

An electric compressor 10 according to one embodiment of the present invention will now be described with reference to Figs. 1A to 7. In the description of this specification, the front side and the rear side correspond to the left side and the right side, respectively, in Fig. 1A.

The electric compressor 10 shown in Fig. 1A is a scroll electric compressor. A rotating electric machine M of the electric compressor 10 includes a rotor 11, a rotary shaft 12, a stator 13, a motor housing 14, a compression operation body, which is a movable scroll 15 in this embodiment, and a fixed scroll 16. The rotor 11 is fixed to the rotary shaft 12, and the stator 13 is securely fitted to the inner circumferential surface of the motor housing 14. The movable scroll 15 orbits about the axis of the rotary shaft 12 as the rotary shaft 12 is rotated. When the movable scroll 15 orbits, compression chambers 17 between the movable scroll 15 and the fixed scroll 16 move toward the center of rotation while reducing their volumes.

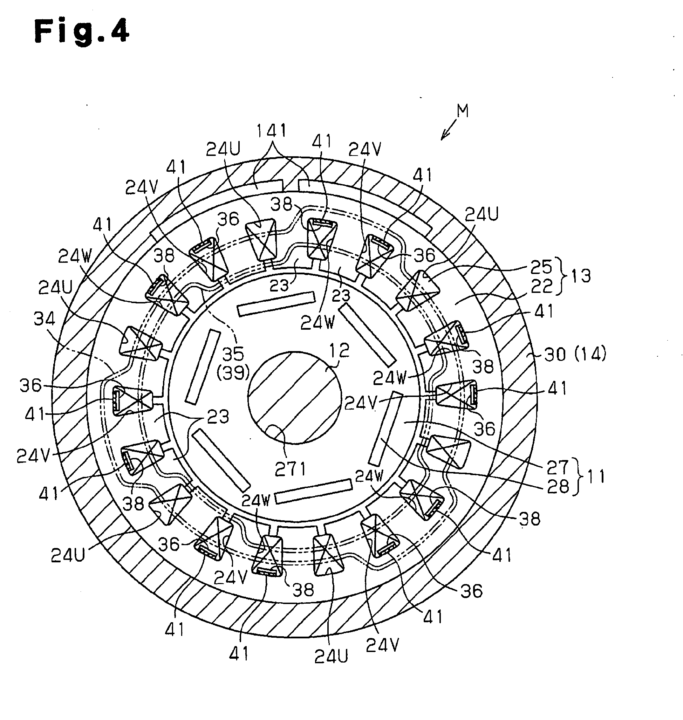

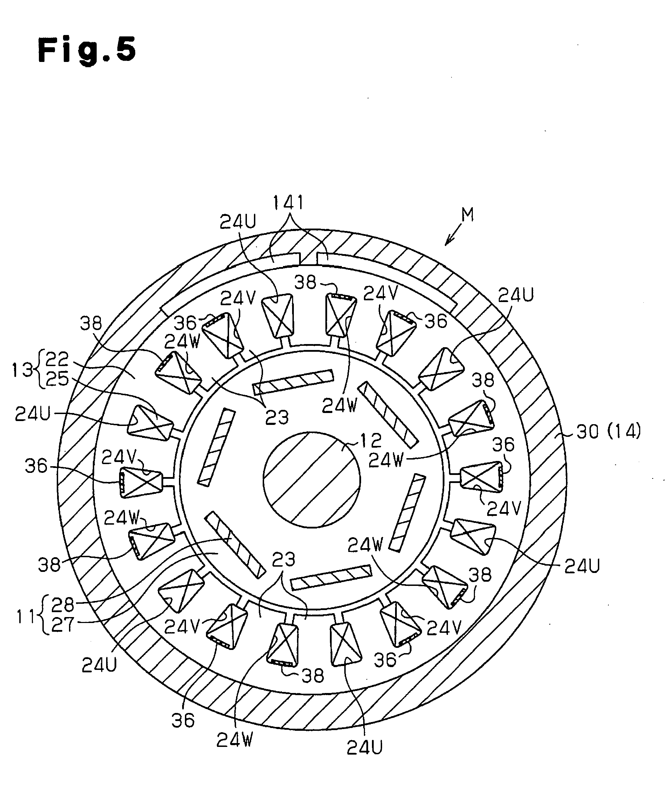

An introduction port 31 is provided in a circumferential wall 30 of the motor housing 14. The introduction port 31 is connected to an external refrigerant circuit, which is not shown, and refrigerant gas is introduced into the motor housing 14 from the external refrigerant circuit via the introduction port 31. The refrigerant gas introduced to the motor housing 14 is drawn into the compression chambers 17 via a passage 141 (shown in Figs. 4 and 5), which is provided between the inner circumferential surface of the motor housing 14 and the outer circumferential surface of the stator 13, and a suction port 18 by orbiting motion of the movable scroll 15 (suction operation). The refrigerant gas in the compression chambers 17 is compressed by orbiting motion of the movable scroll 15 (discharge operation), and is discharged into a discharge chamber 21 through a discharge port 19 while flexing a discharge valve flap 20. The refrigerant gas in the discharge chamber 21 flows out to the external refrigerant circuit, and returns to the motor housing 14.

As shown in Figs. 4 and 5, the stator 13 includes an annular stator core 22, teeth 23, which are arranged along the inner circumference of the stator core 22, and slots 24U, 24V, 24W, which are formed between adjacent teeth 23, and coils 25, which pass through the slots 24U, 24V, 24W. In the preferred embodiment, the number of the teeth 23 and the number of the slots 24U, 24V, 24W are each eighteen. The slots 24U, 24V, 24W are arranged at equal pitches along the circumferential direction of the annular stator 13.

As shown in Fig. 1A, the stator core 22 is configured by laminating several core plates 26 made of magnetic material (steel plates). The rotor 11 includes a rotor core 27 and permanent magnets 28, which are embedded in the rotor core 27. The rotor core 27 is configured by laminating several core plates 29 made of magnetic material (steel plates). A shaft hole 271 is formed at the central portion of the rotor core 27 to extend through the rotor core 27 in the axial direction, and the rotary shaft 12 extends through the shaft hole 271. The rotary shaft 12 is secured to the rotor core 27.

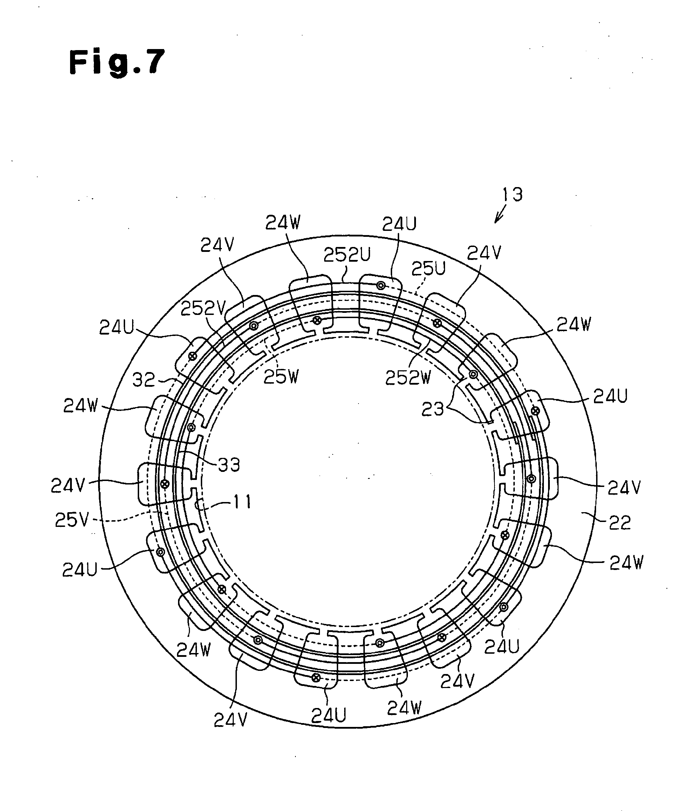

Fig. 7 is a schematic diagram illustrating the stator 13 as viewed from the front side. The coils 25 are provided on the teeth 23 by wave winding. The coils 25 in the slots 24U, 24V, 24W are separated from the inner wall of the slots 24U, 24V, 24W by insulating sheets (not shown), which are arranged between the coils 25 and the inner wall of the slots 24U, 24V, 24W.

A U-phase coil (shown by reference numeral 25U) passes through a first group of slots (shown by reference numeral 24U). A V-phase coil (shown by reference numeral 25V) passes through a second group of slots (shown by reference numeral 24V), and a W-phase coil (shown by reference numeral 25W) passes through a third group of slots (shown by reference numeral 24W). In Fig. 7, sections of each phase coil 25U, 25V, 25W shown by solid lines exist on the front end surface (first end) of the stator core 22. That is, the U-phase coil 25U includes second coil ends 252U, which are sections that pass through the slots 24U and protrude forward from the front end surface of the stator core 22. The V-phase coil 25V includes second coil ends 252V, which are sections that pass through the slots 24V and protrude forward from the front end surface of the stator core 22. The W-phase coil 25W includes second coil ends 252W, which are sections that pass through the slots 24W and protrude forward from the front end surface of the stator core 22. Sections of each phase coil 25U, 25V, 25W shown by broken lines exist on the rear end surface (second end) of the stator core 22. In each of the phase coils 25U, 25V, 25W, sections between the sections shown by the solid lines and the sections shown by the broken lines pass through the associated slots 24U, 24V, 24W.

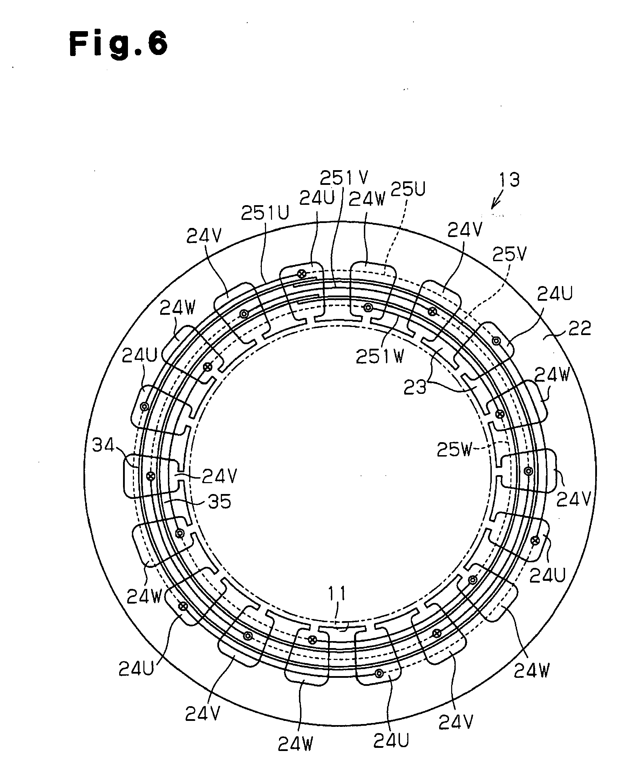

Fig. 6 is a schematic diagram illustrating the stator 13 as viewed from the rear side. Sections of the phase coils 25U, 25V, 25W shown by solid lines in Fig. 6 exist on the rear end surface of the stator core 22 of the stator 13. Sections of the phase coils 25U, 25V, 25W shown by broken lines in Fig. 6 exist on the front end surface of the stator core 22 of the stator 13. That is, the U-phase coil 25U includes first coil ends 251U, which are sections that pass through the slots 24U and protrude rearward from the rear end surface of the stator core 22. The V-phase coil 25V includes first coil ends 251V, which are sections that pass through the slots 24V and protrude rearward from the rear end surface of the stator core 22. The W-phase coil 25W includes first coil ends 251W, which are sections that pass through the slots 24W and protrude rearward from the rear end surface of the stator core 22.

As shown in Fig. 7, a first insulating portion 32 is arranged between the second coil ends 252U of the U-phase coil 25U and the second coil ends 252V of the V-phase coil 25V. The first insulating portion 32 is arranged to wrap around the rotor 11 once. A first insulating portion 33 is arranged between the second coil ends 252V of the V-phase coil 25V and the second coil ends 252W of the W-phase coil 25W. The first insulating portion 33 is arranged to wrap around the rotor 11 once. The first insulating portions 32 and 33 are both made of a synthetic resin, and are formed into a strip shape. The ends of the strip-shaped first insulating portion 32 are heat welded to each other and the ends of the strip-shaped first insulating portion 33 are also heat welded to each other.

As shown in Fig. 6, a second insulating portion 34 is arranged between the first coil ends 251U of the U-phase coil 25U and the first coil ends 251V of the V-phase coil 25V. The second insulating portion 34 is arranged to wrap around the rotor 11 once. A second insulating portion 35 is arranged between the first coil ends 251V of the V-phase coil 25V and the first coil ends 251W of the W-phase coil 25W. The second insulating portion 35 is arranged to wrap around the rotor 11 once. The second insulating portion 34 is arranged radially outward of the second insulating portion 35. As a result, the second insulating portion 35 is surrounded by the second insulating portion 34. The second insulating portion 34 and the second insulating portion 35 are both made of a synthetic resin, and are formed into a strip shape. The ends of the strip-shaped second insulating portion 34 are heat welded to each other and the ends of the strip-shaped second insulating portion 35 are also heat welded to each other.

As shown in Fig. 1B, the first insulating portion 32 and the second insulating portion 34 are connected by bridge pieces 36 (six in this embodiment). As shown in Figs. 4 and 5, the bridge pieces 36 are inserted in the slots 24V in which the V-phase coil 25V is inserted. The first insulating portion 32, the second insulating portion 34, and the bridge pieces 36 configure an interphase insulating sheet 37, which insulates the coil ends of the V-phase coil 25V from the coil ends of the U-phase coil 25U. In this embodiment, the bridge pieces 36 are arranged to contact an inner surface 320 of the annular first insulating portion 32 and an inner surface 340 of the annular second insulating portion 34.

The first insulating portion 33 and the second insulating portion 35 are coupled by bridge pieces 38 (six in this embodiment as shown in Figs. 4 and 5). As shown in Figs. 4 and 5, the bridge pieces 38 are inserted in the slots 24W in which the W-phase coil 25W is inserted. The first insulating portion 33, the second insulating portion 35, and the bridge pieces 38 configure an interphase insulating sheet 39, which insulates the coil ends of the U-phase coil 25U from the coil ends of the W-phase coil 25W.

Since the configuration of the interphase insulating sheet 39 and that of the interphase insulating sheet 37 are the same, only the interphase insulating sheet 37 will be discussed below.

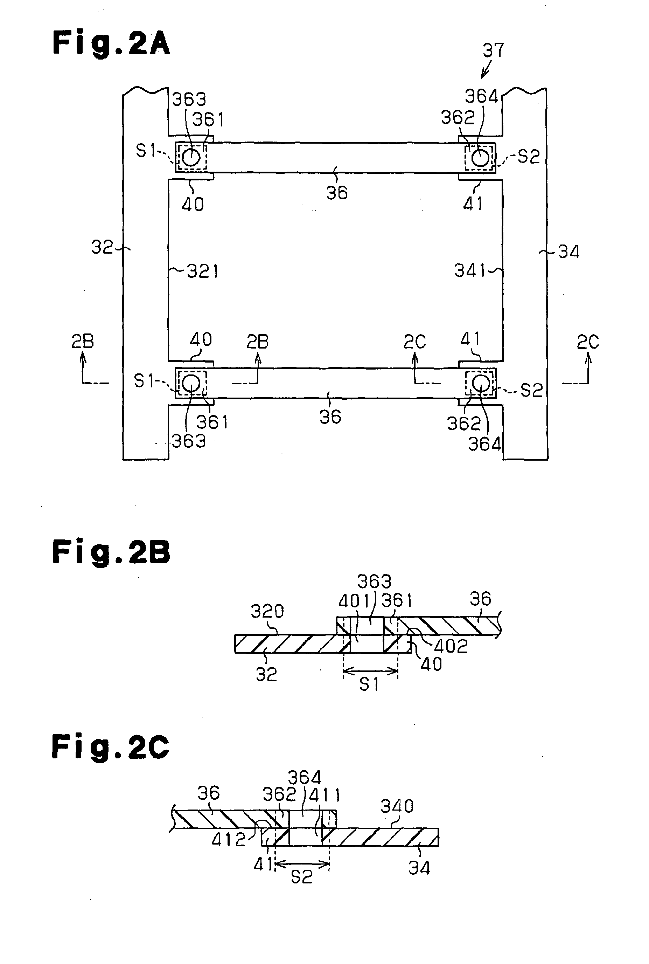

Fig. 2A shows a state where the interphase insulating sheet 37 is developed into a flat state. Fig. 2B shows a cross-sectional view taken along line 2B-2B in Fig. 2A. Fig. 2C shows a cross-sectional view taken along line 2C-2C in Fig. 2A. First coupling aids 40 extend toward the second insulating portion 34 from an opposing end 321 of the first insulating portion 32 facing the second insulating portion 34. The first coupling aids 40 are integrally formed with the first insulating portion 32. In this embodiment, the number of the first coupling aids 40 is six. Second coupling aids 41 extend toward the first insulating portion 32 from an opposing end 341 of the second insulating portion 34 facing the first insulating portion 32. The second coupling aids 41 are integrally formed with the second insulating portion 34. In this embodiment, the number of the second coupling aids 41 is six. As shown in Fig. 2B, a first end portion 361 of each bridge piece 36 closely contacts and is heat welded to an inner surface 402 of the associated first coupling aid 40, which is part of the first insulating portion 32, that is, part of the inner surface 320 of the first insulating portion 32. As shown in Fig. 2C, a second end portion 362 of each bridge piece 36 closely contacts and is heat welded to an inner surface 412 of the associated second coupling aid 41, which is part of the second insulating portion 34, that is, part of the inner surface 340 of the second insulating portion 34.

Most part of the first coupling aids 40 and the second coupling aids 41 of the interphase insulating sheet 37 is in the V-phase slots 24V. Most part of the first coupling aids 40 and the second coupling aids 41 of the interphase insulating sheet 39 are in the W-phase slots 24W.

As shown in Fig. 2B, a circular first positioning hole 401 is formed through each first coupling aid 40, a circular third positioning hole 363 is formed through the first end portion 361 of each bridge piece 36. The first positioning hole 401 and the third positioning hole 363 have the same diameter and are aligned with each other.

As shown in Fig. 2C, a circular second positioning hole 411 is formed through each second coupling aid 41, and a circular fourth positioning hole 364 is formed through the second end portion 362 of each bridge piece 36. The second positioning hole 411 and the fourth positioning hole 364 have the same diameter and are aligned with each other.

As shown in Fig. 2B, the first positioning hole 401 and the third positioning hole 363 are within the range of a heat-welding zone S1 at the contact portion between the first end portion 361 of each bridge piece 36 and the associated first coupling aid 40. As shown in Fig. 2C, the second positioning hole 411 and the fourth positioning hole 364 are within the range of a heat-welding zone S2 at the contact portion between the second end portion 362 of each bridge piece 36 and the associated second coupling aid 41.

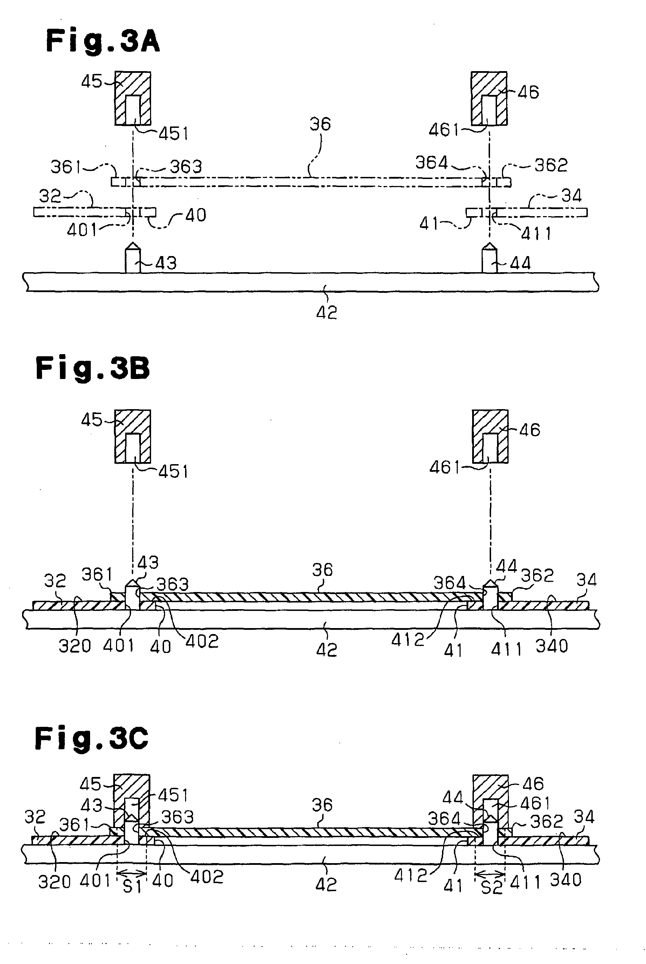

Fig. 3A shows an ultrasonic welding apparatus, which heat welds each bridge piece 36 to the associated first coupling aid 40 of the first insulating portion 32 and the associated second coupling aid 41 of the second insulating portion 34 using ultrasonic wave. The apparatus includes a ferrous ultrasonic welding base 42. The upper surface of the ultrasonic welding base 42 is a flat surface. A first positioning pin 43 and a second positioning pin 44 are fixed on the upper surface of the ultrasonic welding base 42 to extend upward. The first positioning pin 43 is a circular pin the diameter of which is slightly smaller than the diameter of the first positioning hole 401 and the third positioning hole 363. The second positioning pin 44 is a circular pin the diameter of which is slightly smaller than the diameter of the second positioning hole 411 and the fourth positioning hole 364.

Also, the ultrasonic welding apparatus includes a first ultrasonic horn 45 and a second ultrasonic horn 46. The first ultrasonic horn 45 and the second ultrasonic horn 46 integrally move up and down. The lower surfaces of the first ultrasonic horn 45 and the second ultrasonic horn 46 are flat surfaces that are parallel to the upper surface of the ultrasonic welding base 42. A first introduction recess 451 is formed in the lower surface of the first ultrasonic horn 45, and a second introduction recess 461 is formed in the lower surface of the second ultrasonic horn 46. The first introduction recess 451 has the same diameter as the first positioning hole 401 and the third positioning hole 363, and the first positioning pin 43 is selectively inserted in the first introduction recess 451. The second introduction recess 461 has the same diameter as the second positioning hole 411 and the fourth positioning hole 364, and the second positioning pin 44 is selectively inserted in the second introduction recess 461.

Figs. 3B and 3C show a method for coupling each bridge piece 36 to the associated first coupling aid 40 of the first insulating portion 32 and the associated second coupling aid 41 of the second insulating portion 34. As shown in Fig. 3B, the first insulating portion 32 is placed on the ultrasonic welding base 42 such that the first positioning pin 43 is inserted in one of the first positioning holes 401, and the second insulating portion 34 is placed on the ultrasonic welding base 42 such that the second positioning pin 44 is inserted in one of the second positioning holes 411. Then, the first end portion 361 of one of the bridge pieces 36 is placed on the associated first coupling aid 40, and the second end portion 362 of the bridge piece 36 is placed on the associated second coupling aid 41 such that the first positioning pin 43 is inserted in the associated third positioning hole 363, and the second positioning pin 44 is inserted in the associated fourth positioning hole 364.

Subsequently, as shown in Fig. 3C, the first ultrasonic horn 45 and the second ultrasonic horn 46 move downward such that the first positioning pin 43 is introduced into the first introduction recess 451, and the second positioning pin 44 is introduced into the second introduction recess 461. The first ultrasonic horn 45 and the second ultrasonic horn 46 are pressed against the bridge piece 36. The first end portion 361 of the bridge piece 36 and the first coupling aid 40 closely contact each other by being sandwiched between the upper surface of the ultrasonic welding base 42 and the lower surface of the first ultrasonic horn 45, and the second end portion 362 of the bridge piece 36 and the second coupling aid 41 closely contact each other by being sandwiched between the upper surface of the ultrasonic welding base 42 and the lower surface of the second ultrasonic horn 46.

Then, in the zone where the first end portion 361 contacts the first coupling aid 40, the zone S1 corresponding to the lower surface of the first ultrasonic horn 45 is ultrasonically welded (heat welded). In the zone where the second end portion 362 contacts the second coupling aid 41, the zone S2 corresponding to the lower surface of the second ultrasonic horn 46 is ultrasonically welded (heat welded).

The preferred embodiment has the following advantages.
(1) The ultrasonic welding is performed in a state where the first positioning pin 43 is inserted in the first positioning hole 401 and the third positioning hole 363, and the second positioning pin 44 is inserted in the second positioning hole 411 and the fourth positioning hole 364. Thus, during ultrasonic welding, positional displacement is suppressed from occurring between the first coupling aid 40 and the bridge piece 36, and between the second coupling aid 41 and the bridge piece 36. As a result, the interphase insulating sheet 37 is easily manufactured, which includes the first insulating portion 32 and the second insulating portion 34, which are separate from each other by a predetermined distance.
(2) During ultrasonic welding, the bridge piece 36 easily moves with respect to the first insulating portion 32 and the second insulating portion 34 by ultrasonic vibration. However, in the preferred embodiment, since the first positioning pin 43 is inserted in the first positioning hole 401 and the third positioning hole 363, and the second positioning pin 44 is inserted in the second positioning hole 411 and the fourth positioning hole 364, the bridge piece 36 is suppressed from moving with respect to the first insulating portion 32 and the second insulating portion 34 by the ultrasonic vibration.
(3) The first positioning pin 43 and the second positioning pin 44 are provided on the upper surface of the ultrasonic welding base 42 to stand upright. Therefore, by inserting the first positioning pin 43 in the first positioning hole 401 and the third positioning hole 363, and the second positioning pin 44 in the second positioning hole 411 and the fourth positioning hole 364, the first insulating portion 32, the second insulating portion 34, and the bridge piece 36 are suppressed from being displaced on the ultrasonic welding base 42. The upper surface of the ultrasonic welding base 42 on which the first insulating portion 32, the second insulating portion 34, and the bridge piece 36 are mounted is suitable for providing the first positioning pin 43 and the second positioning pin 44.
(4) The first positioning pin 43 is introduced into the first introduction recess 451, and the second positioning pin 44 is introduced into the second introduction recess 461. Thus, the first coupling aid 40 and the first end portion 361 of the bridge piece 36 closely contact each other by being securely sandwiched between the upper surface of the ultrasonic welding base 42 and the lower surface of the first ultrasonic horn 45, and the second coupling aid 41 and the second end portion 362 of the bridge piece 36 closely contact each other by being securely sandwiched between the upper surface of the ultrasonic welding base 42 and the lower surface of the second ultrasonic horn 46. As a result, the first coupling aid 40 and the first end portion 361 of the bridge piece 36 are reliably ultrasonically welded, and the second coupling aid 41 and the second end portion 362 of the bridge piece 36 are reliably ultrasonically welded.
(5) If the first positioning holes 401 exist at part of the first insulating portion 32 other than the first coupling aids 40, the first positioning holes 401 are arranged between the first coil ends 251U, 251V. Thus, electrical insulation between the first coil ends 251U and the first coil ends 251V is not reliably ensured. Likewise, if the second positioning holes 411 exist at part of the second insulating portion 34 other than the second coupling aids 41, the second positioning holes 411 are arranged between the second coil ends 252U and the second coil ends 252V. Thus, electrical insulation between the second coil ends 252U and the second coil ends 252V is not reliably ensured.
   However, as in the preferred embodiment, the configuration in which the first positioning holes 401 are provided in the first coupling aids 40, which are inserted in the slots 24V, and the second positioning holes 411 are provided in the second coupling aids 41, which are inserted in the slots 24V, electrical insulation between the second coil ends 252U and the second coil ends 252V is reliably ensured.
(6) The rotating electric machine M with wave winding that has low pulsation (low vibration) is suitable to be applied to the electric compressor 10. That is, in the electric compressor 10, there is a demand for reducing size in addition to reducing noise and vibration. The rotating electric machine M with wave winding according to the preferred embodiment is suitable for such demand. The electric compressor 10 using the rotating electric machine M with wave winding is particularly suitable for vehicle electric compressors that have particularly severe demands.

The present invention may be modified as follows.

The number of the first positioning hole and the second positioning hole corresponding to each bridge may be more than one.

The bridge pieces may be welded on the outer surface of the annular first insulating portion and the outer surface of the annular second insulating portion.

The ultrasonic welding between the first end portion 361 of each bridge piece 36 and the associated first coupling aid 40, and ultrasonic welding between the second end portion 362 of each bridge piece 36 and the associated second coupling aid 41 may be performed by a single ultrasonic horn.

The insulating portions and the bridge pieces may be heat welded by heat-welding means other than ultrasonic welding.

The present invention may be applied to electric compressors other than scroll compressors (for example, piston compressors). Pistons are compression operation bodies.

## Claims

1. An interphase insulating sheet (37) of a rotating electric machine (M), the rotating electric machine (M) being provided with a stator (13) including an annular stator core (22), the stator core (22) including first and second end faces facing opposite directions in the axial direction of the stator core (22), the stator core (22) including a plurality of teeth (23) arranged along an inner circumference of the stator core (22) in the circumferential direction, slots (24U, 24V, 24W) being formed between adjacent teeth (23), coils (25) of a plurality of phases being provided on the teeth (23) in wave winding passing through the slots (24U, 24V, 24W),
wherein the coil of each phase includes a first coil end (251U, 251V, 251W) arranged to protrude outside from the first end face and a second coil end (252U, 252V, 252W) arranged to protrude outside from the second end face,
wherein the interphase insulating sheet (37) includes a first insulating portion (32) arranged between the first coil ends (251U, 251V, 251W) of two different phases, a second insulating portion (34) arranged between the second coil ends (252U, 252V, 252W) of two different phases, and at least one bridge piece (36) inserted in one of the slots (24U, 24V, 24W), the bridge piece (36) including a first end portion coupled to the first insulating portion (32) and a second end portion coupled to the second insulating portion (34),
the interphase insulating sheet (37) being **characterized in that** the first insulating portion (32) includes at least one first coupling aid (40) integrally provided with the first insulating portion (32) to extend from an opposing end of the first insulating portion (32) facing the second insulating portion (34), and the second insulating portion (34) includes at least one second coupling aid (41) integrally provided with the second insulating portion (34) to extend from an opposing end of the second insulating portion (34) facing the first insulating portion (32),
wherein the first end portion of the bridge piece (36) is heat welded to the first coupling aid (40), and the second end portion of the bridge piece (36) is heat welded to the second coupling aid (41),
wherein the first coupling aid (40) includes a first positioning hole (401) and the second coupling aid (41) includes a second positioning hole (411), and
wherein the first end portion of the bridge piece (36) includes a third positioning hole (363), which overlaps the first positioning hole (401), and the second end portion of the bridge piece (36) includes a fourth positioning hole (364), which overlaps the second positioning hole (411).

2. The interphase insulating sheet (37) according to claim 1, **characterized in that** the heat welding is ultrasonic welding.

3. An electric compressor, which compresses gas in a compression chamber and discharges the gas by compression operation of a compression operation body based on rotation of a rotary shaft, the electric compressor being **characterized in that** the rotary shaft is driven by a rotating electric machine (M) provided with the interphase insulating sheet (37) according to claim 1.

4. A method for manufacturing an interphase insulating sheet (37) of a rotating electric machine (M), the rotating electric machine (M) being provided with a stator (13) including an annular stator core (22), the stator core (22) including first and second end faces facing opposite directions in the axial direction of the stator core (22), the stator core (22) including a plurality of teeth (23) arranged along an inner circumference of the stator core (22) in the circumferential direction, slots (24U, 24V, 24W) being formed between adjacent teeth (23), coils (25) of a plurality of phases being provided on the teeth (23) in wave winding passing through the slots (24U, 24V, 24W), the coil (25) of each phase including a first coil end (251U, 251V, 251W) arranged to protrude outside from the first end face and a second coil end (252U, 252V, 252W) arranged to protrude outside from the second end face, the method being
**characterized by**:
preparing a first insulating portion (32) to be arranged between the first coil ends (251U, 251V, 251W) of two different phases and a second insulating portion (34) to be arranged between the second coil ends (252U, 252V, 252W) of two different phases, the first insulating portion (32) including at least one first coupling aid (40) integrally provided with the first insulating portion (32) to extend from an opposing end of the first insulating portion (32) facing the second insulating portion (34), the second insulating portion (34) including at least one second coupling aid (41) integrally provided with the second insulating portion (34) to extend from an opposing end of the second insulating portion (34) facing the first insulating portion (32);
preparing at least one bridge piece (36) inserted in one of the slots (24U, 24V, 24W), the bridge piece (36) including a first end portion coupled to the first insulating portion (32) and a second end portion coupled to the second insulating portion (34);
forming a first positioning hole (401) in the first coupling aid (40);
forming a second positioning hole (411) in the second coupling aid (41);
forming a third positioning hole (363) in the first end portion of the bridge piece (36);
forming a fourth positioning hole (364) in the second end portion of the bridge piece (36);
inserting a first positioning pin (43) in the first positioning hole (401) and the third positioning hole (363), and in a state where the first coupling aid (40) contacts the first end portion of the bridge piece (36), heat welding the first coupling aid (40) with the first end portion of the bridge piece (36); and
inserting a second positioning pin (44) in the second positioning hole (411) and the fourth positioning hole (364), and in a state where the second coupling aid (41) contacts the second end portion of the bridge piece (36), heat welding the second coupling aid (41) with the second end portion of the bridge piece (36).

5. The method according to claim 4, **characterized in that** the heat welding is ultrasonic welding.

6. The method according to claim 4, **characterized by**:
preparing an ultrasonic welding base (42) including the first positioning pin (43) and the second positioning pin (44), a first ultrasonic horn (45), and a second ultrasonic horn (46);
wherein the first coupling aid (40) and the first end portion of the bridge piece (36) are caused to contact each other by being sandwiched between the ultrasonic welding base (42) and the first ultrasonic horn (45); and
wherein the second coupling aid (41) and the second end portion of the bridge piece (36) are caused to contact each other by being sandwiched between the ultrasonic welding base (42) and the second ultrasonic horn (46).

7. The method according to claim.6, **characterized by**:
introducing the first positioning pin (43) into a first introduction recess provided in the first ultrasonic horn (45) when the first coupling aid (40) and the first end portion of the bridge piece (36) are sandwiched between the ultrasonic welding base (42) and the first ultrasonic horn (45); and
introducing the second positioning pin (44) into a second introduction recess provided in the second ultrasonic horn (46) when the second coupling aid (41) and the second end portion of the bridge piece (36) are sandwiched between the ultrasonic welding base (42) and the second ultrasonic horn (46).
